# EUROPEAN PATENT SPECIFICATION

(11) **EP 2 736 704 B1**
(45) Date of publication and mention of the grant of the patent: **15.07.2020**
(21) Application number: 12740599.1
(22) Date of filing: 27.07.2012
(51) Int. Cl.: B29C 70/44, B29C 70/46, B29C 70/54, B29D 99/00, B29C 70/02

(54) **A DEVICE FOR THE MANUFACTURE OF A BONDED COMPONENT FROM FIBRE-REINFORCED PLASTICS AND ALSO A METHOD**
VORRICHTUNG ZUR HERSTELLUNG EINER GEBUNDENEN KOMPONENTE AUS FASERVERSTÄRKTEM KUNSTSTOFF UND VERFAHREN
DISPOSITIF POUR LA FABRICATION D'UN COMPOSANT FIXÉ À PARTIR DE PLASTIQUES RENFORCÉS DE FIBRES ET ÉGALEMENT PROCÉDÉ

(30) Priority: 27.07.2011 DE 102011079943; 27.07.2011 US 201161512004 P
(43) Date of publication of application: 04.06.2014
(73) Proprietor: Airbus Operations GmbH, 21129 Hamburg (DE)
(72) Inventor: BARDENHAGEN, Heinz, 21680 Stade (DE); SUESSMUTH, Karsten, 21682 Stade (DE)
(74) Representative: LKGLOBAL Lorenz & Kopf PartG mbB Patentanwälte
(86) International application number: PCT/EP2012/064822
(87) International publication number: WO 2013/014285

(56) References cited:
- EP-A1- 1 134 070
- EP-A1- 2 055 464
- EP-A2- 1 231 046
- WO-A2-01/96094
- US-A1- 2010 154 186
- US-A1- 2011 156 305

## Description

The invention concerns in the first instance a device for the manufacture of a bonded component from fibre-reinforced plastics, with at least one base moulding tool and at least one moulding tool, wherein the bonded component is arranged between the base moulding tool and the moulding tool, and the moulding tool is covered with an aeration material and with a vacuum envelope, wherein the vacuum envelope is sealed with respect to the base moulding tool by means of a seal.

For components in which high specific strengths and stiffnesses are required per unit weight, as, for example, in aerospace applications, fibre-reinforced plastics (FRPs) are often deployed. A fibre-reinforced plastic is a material that is formed with a multiplicity of reinforcing fibres that are embedded in a plastic matrix material. Carbon fibres, glass fibres, Kevlar fibres, aramide® fibres, natural fibres, or similar, also natural fibres to some extent, or similar, are deployed as the reinforcing fibres, amongst others. The matrix material often consists of a thermosetting plastic, such as, for example, epoxy resin, polyester resin, phenol resin, or bismaleimide resin (so-called BMI resin). The manufacture of such components from fibre-reinforced plastics is undertaken with diverse methods, in which the components are, in general, cured with the aid of pressure and temperature.

If by virtue of the complexity of the components it is not possible to deploy heating presses, moulds are used into which the fibre-reinforced plastics are introduced. These moulds can be closed on all sides and can fully surround the bonded component. Alternatively open moulds are deployed. In the case of open moulds the required pressure as a rule is transferred directly onto the fibre-reinforced plastic, i.e. the bonded component, by means of a vacuum generation system. With the deployment of moulding tools a vacuum generation system is also used, wherein the pressure is transferred onto the bonded component via the moulding tools.

Complex, integral FRP-structures usually consist of at least one base laminate and a multiplicity of reinforcement laminates and optional connecting elements. These elements can take the form of fibre-reinforced plastic components that have already been consolidated, or components of other materials, or fibre-reinforced plastic laminates.

Fibre-reinforced plastic laminates consist of two or a plurality of layers of fibres that have been preimpregnated with a matrix material (so-called prepreg material). The reinforcing fibres can be present as a unidirectional layer, as a woven fabric, or as a multilayer mat. The layers mostly have differing prime fibre directions. Increasingly shells are being produced with integral longitudinal stiffeners, such as, for example, I-stringers, which in particular are being used for the production of lifting surfaces, ailerons, landing flaps, as well as elevator units and vertical tail units, in the manufacture of aircraft in a sectional form of construction. Integrally stiffened shells are often spherically curved components. As a result of the spatial design of the base laminate, and as a consequence of further reinforcement elements and insulation materials, and also further elements, complex components ensue with different material thicknesses and contours in some regions.

If the moulding tools for the curing process are not at the same time used for an earlier shaping process, the manufacture of bonded components, such as, for example, integrally reinforced shells, is at the present time usually undertaken by means of the manufacturing procedure that is briefly outlined in what follows. In the first instance stringer laminates are positioned on shaping tools and on these are shaped into a prescribed design geometry. At least one base laminate is then placed on a base moulding tool and the shaping tools, which have been grouped together in advance, are laid down on the base moulding tool. The shaping tools are then removed, and moulding tools are inserted in their place. The arrangement thus prepared is provided with a vacuum generation system, thus forming the device for the manufacture of bonded components, and this device is placed in an autoclave for purposes of curing with the application of pressure and temperature. After it has been fully cured the bonded component can be taken out of the device.

In order to avoid excessive sinking of the moulding tools during the autoclave process, moulding tools with a so-called "slump limiter" are often deployed, the use of which brings with it, however, a severe disadvantage. This is because the form-defining cavity formed by a moulding tool with a slump limiter is usually embodied in accordance with the required design geometry of the bonded component. The volume of the laminates filling this cavity is, on the other hand, often dimensioned to be larger. In the autoclave a higher pressure then ensues underneath the moulding tool with the slump limiter overhang, in comparison to the adjacent moulding tool. As a result there can be an undesirable transfer of matrix material, so that the adjacent moulding tool is pushed upwards, with the formation of an undesirable change in level, so that the bonded component deviates in an impermissible manner from the prescribed design geometry.

During the curing process the cavities formed by the moulding tools and the overlaying vacuum generation system are filled in an intended manner with fibre-reinforced plastic. In addition to the cavity prescribing the nominal spatial geometry of the bonded component, however, further parasitic cavities exist, which can lead to deviations from the required design geometry of the bonded component. In the devices of known art the undesirable voids ensue, amongst other reasons, as a result of small gaps and capillaries between the moulding tools and spaces underneath the moulding tools that are not filled. These spaces that are not filled arise, for example, as a result of deviations in the dimensions and/or locations of the laminates, deviations in the dimensions and/or locations of the moulding tools, and thermal expansion effects on the moulding tools as a result of high temperatures in the autoclave. Furthermore initial voids exist, or unintended cavities form within the vacuum generation system. It is common to all parasitic cavities that during the curing process they fill with the fibre-reinforced plastics introduced, in particular with their plastic matrix. The losses of matrix material that are brought about by this means often lead to reductions in the thickness of the bonded component that can no longer be tolerated. As a rule such reductions in the thickness of the laminates require rework that is intensive in terms of time and cost. For purposes of avoiding the reductions in thickness in those zones of the device in which an inadequate laminate thickness is to be anticipated, additional material can, for example, be introduced so as to compensate for any losses. However this procedure also leads to higher production costs as a result of the increased use of material.

Further prior art is known from EP2055464A1, EP1231046A2, EP1134070A1, US2011156305A1, WO0196094A2, DE2917344A1, DE60306533T2, DE60303484T2 and DE102007054231A1.

The object of the invention is therefore to create a device for the manufacture of bonded components, in particular of integrally reinforced shells made up from fibre-reinforced plastics with the use of at least one base moulding tool and at least one moulding tool with a slump limiter, in which undesirable cavities exist and/or arise to a significantly reduced extent, and sustainable, dimensionally stable, production of such bonded components is possible using a reliable process that is suitable for series production.

This object is achieved in the first instance by means of a device with the features of Claim 1.

In accordance with the invention, opposite end faces of the bonded component ends flush with opposite end sections of at least one moulding tool, or projects underneath the latter. According to a preferred embodiment, at least the central moulding tool has at least one vertical interlock with at least one of its adjacent moulding tools at least one vertical interlock for supressing a lifting at least of the central moulding tool.

As a consequence of the end sections of the moulding tools that have been designed to be free of projections, i.e. overhangs, no parasitic voids exist underneath the end sections, in particular in the region of the end faces of the bonded component. In contrast, in the case of devices of prior known art voids exist underneath the moulding tool overhangs projecting over the end faces of the bonded component; matrix material from the bonded component can flow into these voids, and can lead to deviations from a prescribed design geometry of the bonded component that are no longer acceptable. The bonded component can end flush with the end sections of the moulding tools or can project under the latter with a protrusion of up to several centimetres. The end sections of the moulding tools are embodied in the shape of a wedge so as to create an end surface inclined at between 30° and 60°. In addition to the aeration material and the vacuum envelope the device can have further functional layers, such as, for example, release layers, resin removal layers, and/or tear-off layers. For purposes of curing the bonded component the whole device is placed in an autoclave in which curing takes place to form the finished component. By means of the vertical interlock, vertical movements between adjacent moulding tools in the autoclave are reduced.

According to the invention, each of the at least two outer moulding tools has a slump limiter.

By virtue of the slump limiters, amongst other factors, a vertical downwards movement (slump) of the moulding tools in the autoclave is reduced. The slump limiters are provided along the outer-lying longitudinal edges of the two outer moulding tools, and are preferably designed to be continuous. As a consequence of the slump limiters the probability of the occurrence of a thickness reduction in this region of the bonded component is reduced.

In a further advantageous configuration of the device provision is made that at least two adjacent moulding tools have essentially the same build height.

By means of the same build height in particular an undesirable "bridging" within the device is prevented. In the event of a "bridging" the vacuum envelope in the autoclave spans across two moulding tools directly adjoining one another via a bridging void with an approximately triangular-shaped cross-sectional geometry. The effect leads to the fact that larger mechanical forces act on the higher moulding tool as a result of the autoclave pressure than on the moulding tool with the lower build height. The difference in the forces causes a pressure difference in the laminate underneath the moulding tools adjoining one another, as a result of which there is a unilateral transfer of matrix material in the direction of the pressure drop. As a consequence of the flow of matrix material a change in level arises in the boundary region between adjacent moulding tools, i.e. a step, in the bonded component, which leads to a reduction in thickness of the bonded component, in at least some regions, that is no longer acceptable.

In accordance with a further advantageous configuration of the device the vertical interlock is formed with at least one hold-down face and at least one seating face.

By this means a simple design implementation of a vertical interlock is possible, which limits upwards acting movements of the moulding tools and which enables the moulding tools to be assembled together without the need for additional components, such as, for example, transverse or connecting bars.

In a further form of embodiment of the device the at least one hold-down face and the at least one seating face in each case have an essentially rectangular cross-sectional geometry.

This enables, amongst other factors, cost-effective production of the moulding tools, for example, by milling, and force is transferred over a large surface area. In a variation from this configuration both the seating face and the hold-down face can have an alternative cross-sectional geometry.

In the case of a further beneficial configuration of the device the base moulding tool is formed from a metallic material.

By this means ensue, amongst other factors, a long service life and an excellent stability of form for the base moulding tool. Alternatively moulding tools can be produced with a plastic material that has a sufficient mechanical and thermal load capacity.

In addition the inventive object is achieved by means of a method in accordance with Claim 7, according to which a bonded component is manufactured from fibre-reinforced plastics, in particular using the inventive device in accordance with one of the Claims 1 to 6.

In accordance with the method, reinforcement laminates - such as e.g. stringer laminates - are positioned on shaping tools in the first instance and on these are shaped into a prescribed design geometry. The shaping tools overlaid with the reinforcement laminates are grouped together, aligned in space, and after the overlay of a base moulding tool of the device with at least one base laminate are laid down on the latter. The shaping tools are then removed, and moulding tools are inserted. The arrangement prepared in this manner is overlaid with a vacuum generation system. This device is then placed in an autoclave for purposes of curing with the application of pressure and temperature. After curing the fully cured bonded component is taken out of the device.

In the figure:
Fig. 1 shows a schematic cross-sectional representation through a device of prior known art for the production of components made up from fibre-reinforced plastics.
Fig. 2 shows a simplified representation of a longitudinal section through the device of Fig. 1 with a multiplicity of undesirable voids,
Fig. 3 shows a schematic plan view, a side view and also two cross-sectional representations through a device according to the present invention,
Fig. 4 shows a magnified representation of the scrap section IV from Fig. 3,
Fig. 5 shows a magnified representation of the scrap section V from Fig. 3, and
Fig. 6 shows a cross-sectional representation through an end section of the central moulding tool of the device along the section line C-C in Fig. 3,

In the figures the same design elements have the same reference numbers in each case.

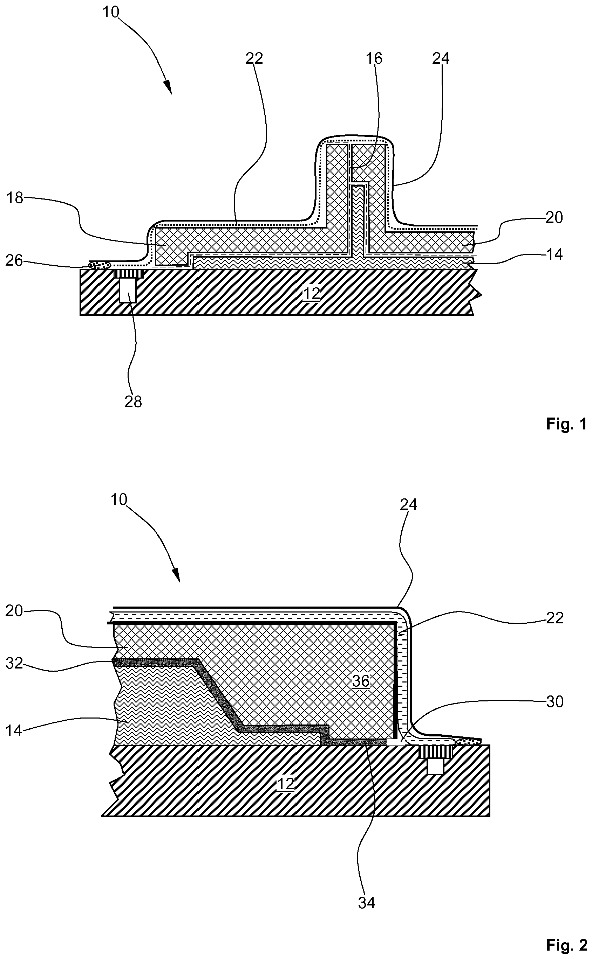

Fig. 1 shows a basic cross-sectional representation through an arrangement of prior known art for the production of bonded components from fibre-reinforced plastics.

The arrangement 10 comprises, amongst other items, a base moulding tool 12 onto which is laid down a bonded component 14 made up from fibre-reinforced plastics. The bonded component 14 is overlaid with a release layer 16, on which lie two form-defining moulding tools 18, 20. The edge-side moulding tool 18 is fitted with a slump limiter, not designated. Non-designated surfaces of the moulding tools 18, 20 are overlaid with an aeration material 22, which for its part is overlaid with a vacuum envelope 24. Optionally the release layer 16 can also be provided underneath the aeration layer 22, in at least some sections. The release layer 16, the aeration material 22, and also the vacuum envelope 24 together form the vacuum generation system, not designated, of the device 10. The vacuum envelope 24 is sealed with respect to the base moulding tool 12 by means of an elastic seal 26, and can be subjected to a partial vacuum via a vacuum channel 28. The device 10 is then placed in an autoclave, not represented, for purposes of curing the bonded component 14 with the simultaneous application of pressure and temperature. During the autoclave process the vacuum channel 28, at least for some of the time, can be simply subjected to normal ambient air pressure or a low level of partial vacuum.

Fig. 2 shows a simplified representation of a longitudinal section through the arrangement of Fig. 1 with a multiplicity of undesirable voids. It can be seen from Fig. 2 that amongst other items, a void 30 in the form of a gusset, not designated, exists underneath the aeration material 22, i.e. the vacuum envelope 24, and a further void 32 exists between the moulding tool 20 and the bonded component 14. In addition a void 34 exists underneath an overhang 36 of the moulding tool 20. As has already been elucidated in the introduction the parasitic voids 30 to 34 can fill with matrix material from the bonded component 14, in particular during the autoclave process under high pressure. The result in some individual cases can be a reduction in thickness of the bonded component 14 that is no longer tolerable, in at least some regions; as a rule this makes complex and cost-intensive rework necessary.

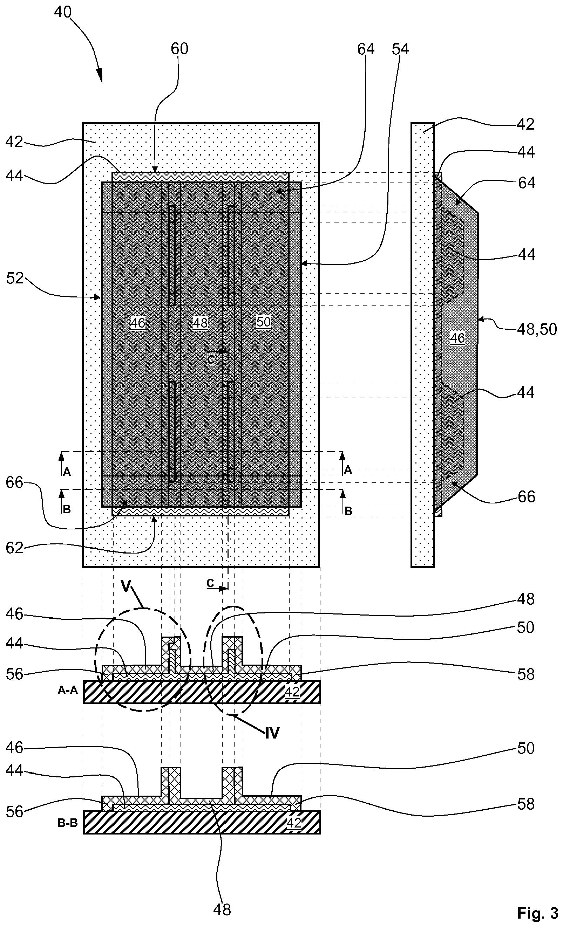

Fig. 3 shows a simplified plan view onto a device cording to the present invention, a side view of the device, and also two cross-sections through the device along the section lines A-A and B-B. In the interests of better clarity of the drawing the necessary vacuum generation system of the device, which usually comprises at least one release layer, an aeration material, e.g. of a polyester fleece, an optional resin removal layer, and also the vacuum envelope, is not represented.

The device 40 comprises, amongst other items, a base moulding tool 42 on which is laid down the bonded component 44 to be produced, made up from fibre-reinforced plastics. The bonded component 44 is built up from at least one base laminate and a plurality of reinforcement laminates, in particular for purposes of creating stiffening elements, such as, for example, I-stringers; here these are not provided with reference numbers in the interests of a better overview of the drawing. The bonded component 44 is preferably built up from carbon fibres with an epoxy resin as the matrix material. Alternatively other reinforcing fibres and/or matrix materials, i.e. resin systems, can find application in the bonded component 44. In addition other elements can be provided.

Here, in an exemplary manner, three moulding tools 46, 48, 50 are set down on the bonded component 44, wherein each of the two outer moulding tools 46, 50 has a slump limiter 56, 58 along its outer-lying longitudinal edge 52, 54. The moulding tools 46, 48, 50 are inventively designed to be free of projections, i.e. overhangs, at least along the end faces 60, 62, with reference to the bonded component 44. This means that the opposing end faces 60, 62 of the bonded component 44 end flush with end sections 64, 66 of the moulding tools 46, 48, 50, or, as represented here in Fig. 3 in an exemplary manner, at least project beyond these slightly on both sides. In a preferred form of embodiment of the invention the end faces 60, 62 on both sides in each case project under the end sections 64, 66 of the moulding tools 46 to 50. By virtue of this configuration, amongst other factors, the formation of undesirable cavities between the moulding tools 46 to 50 and the base moulding tool 42, in particular in the region of the two end sections 64, 66 is reduced to a significant extent, since no moulding tool overhang any longer exists, under which voids can exist or occur. As can be deduced from the side view of the device 40 in Fig. 3, the end sections 64, 66 of the moulding tools are embodied in a raked manner with the formation of inclined end surfaces.

In addition the three moulding tools 46 to 50 in the example of embodiment shown in Fig. 3 have approximately equal build heights, here not designated, so that during the autoclave process in the bonded component 44 approximately equal pressure conditions occur and any undesirable flows of the matrix material out of the bonded component 44 into any parasitic cavities that are still present and/or other regions within the bonded component 44 are significantly reduced, if not actually totally suppressed.

The base moulding tool 42 is preferably manufactured from a metallic material, which has a sufficient mechanical load capacity and also a sufficient temperature resistance, so that it can also withstand the extreme ambient conditions that act on the device 40 in an autoclave. The moulding tools 46 to 50 can be formed from both a metallic material and also a plastic material, which in each case has a sufficiently high mechanical load capacity and temperature resistance.

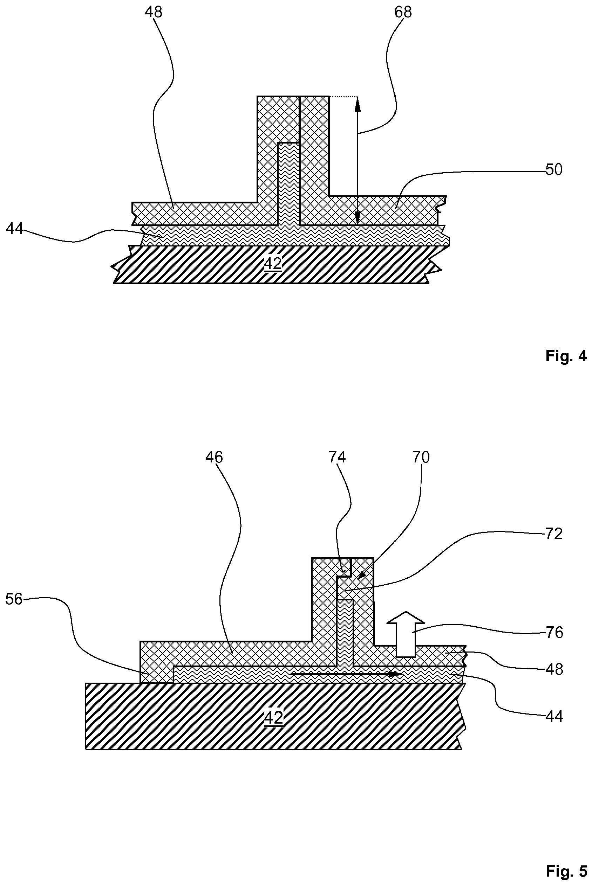

Fig. 4 illustrates a magnified representation of scrap section IV in Fig. 3. In the interests of better clarity the vacuum generation system is likewise not represented. The moulding tools 48, 50 adjoining one another lie on the bonded component 44 made up from the fibre-reinforced plastics. The bonded component 44 is for its part laid down on the base moulding tool 42 and positioned. In particular, so as to achieve as even a pressure distribution as possible of the matrix material within the bonded component 44 during the curing process of the bonded component 44 in the autoclave and to avoid the formation of changes in level, each of the moulding tools 48, 50 has the same build height 68. By virtue of the lack of relevant differences in build height bridging in the vacuum envelope in particular is prevented and pressure differences within the bonded component 44 and any material flows resulting from these are reduced, as are any consequential reductions in thickness.

In addition the moulding tools 48, 50 adjoin one another in a practically gap-free manner, so that in particular during the autoclave process no matrix material from the bonded component 44 can penetrate between the moulding tools 48, 50.

Fig. 5 shows a magnified representation of the scrap section V from Fig. 3.

The left-hand side moulding tool 46 with the integrally designed slump limiter 56 and the central, inner-lying moulding tool 48 lie on the bonded component 44, which in turn is arranged on the base moulding tool 42. In addition the left-hand, i.e. edge-side moulding tool 46 is directly supported on the base moulding tool 42 with the aid of the slump limiter 56. The moulding tools 46, 48 have a so-called vertical interlock 70, which consists of a seating face 72 and a hold-down face 74. The seating face 72 and the hold-down face 74 are in each case preferably embodied integrally (in one piece) with the moulding tools 46, 48 and in each case have an approximately rectangular cross-sectional geometry. The seating face 72 and the hold-down face 74 can be manufactured in a simple manner in production terms, for example by milling longitudinal grooves into the moulding tools 46, 48. Between the seating face 72 and the hold-down face 74 there exists in some regions a form fit, i.e. the seating face 72 lies, in at least some regions, on the hold-down face 74. In particular as a result of the vertical interlock 70 any undesirable upwards movement of the central moulding tool 48 in the direction of the white arrow 76 (in the direction of the vacuum generation system, not included in the drawing here) with respect to the moulding tool 46 is made more difficult. Such an upwards movement can, amongst other factors, be brought about by a horizontal flow of matrix material within the bonded component 44 in the direction of the black arrow, not designated. The cause of this flow of matrix material lies in the fact that during the curing of the bonded component 44 in the autoclave a higher pressure prevails under moulding tool 46 than under moulding tool 48. By virtue of this pressure drop the matrix material flows underneath the moulding tools 46, 48, and in the boundary region between the moulding tools 46, 48 in the direction of the black arrow, wherein the lifting of the moulding tool 48 is suppressed by the hold-down face 74 in conjunction with the seating face 72. This flow of matrix material is only possible in the event of a sufficiently low viscosity of the matrix material of the bonded component 44. With a progressive level of curing of the bonded component 44, i.e. with increasing viscosity of the matrix material, the flow of matrix material decreases continuously until it comes to a complete standstill.

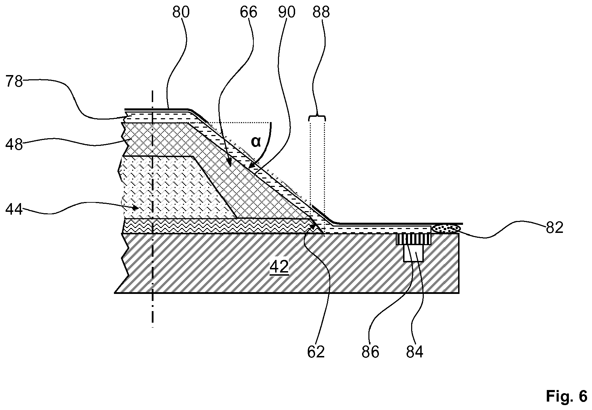

Fig. 6 shows a sectional representation through an end section of the central moulding tool of the device along the section line C-C in Fig. 3. In contrast to the simplified representation in Fig. 3, here the vacuum generation system and the vacuum channel are also represented.

The bonded component 44 lies in turn on the base moulding tool 42 and here is covered by the central moulding tool 48. The moulding tool 48 is covered with an aeration material 78, and by a vacuum envelope 80, which is sealed with respect to the base moulding tool 42 by means of a seal 82. The base moulding tool 42 has a vacuum channel 84, which serves to produce a partial vacuum underneath the vacuum envelope 80. A filter 86 can be provided within the vacuum channel 84. In accordance with the invention the end face 62 of the bonded component 44 projects underneath the end section 66 of the moulding tool 48 with a small protrusion 88, and the end section 66 is designed in a raked manner. By virtue of the symmetrical build of the whole device 40 the above also applies to the end face of the bonded component 44 that is directed away from the end face 62, and also to the associated end section 64 of the moulding tool 48 and the other moulding tools 46, 50, which are not visible here.

By virtue of the configuration of the raked end section 66 of the moulding tool 48, essentially free of projections, i.e. overhangs, with reference to the end face 62 of the bonded component 48, no undesirable cavities exist between the moulding tool 48 and the base moulding tool 42 in the region of the end section 66; during the curing process in the autoclave such cavities could fill up with matrix material from the bonded component 44, and could lead to an intolerable reduction of the thickness of the bonded component 44 in this edge zone.

The end section 66 of the moulding tool 48 is embodied as a raked, i.e. inclined end surface 90 with an angle α of, for example, approximately 45°. Angles α that deviate from this value are also possible. The end sections 64, 66 of the two other moulding tools 46, 50, not represented here, are also embodied in a manner corresponding to the configuration in Fig. 6. By virtue of the form of embodiment shown of the end sections 64, 66 the parasitic cavities on the end faces 60, 62 of the bonded component 44 are reduced to a significant extent, i.e. in comparison to conventional moulding tools projecting in the end region they are simply "cut off". In a variation from this configuration it is also possible to design only one end section 64, 66 of at least one moulding tool 46 to 50 to be raked and free of projections as shown. The configuration shown of the end sections 64, 66 of the moulding tools 46 to 50 is particularly effective if a contour of the end faces 60, 62 of the bonded component 44 need not correspond precisely to a design geometry, or if rework of the end faces 60, 62 of the bonded component 44 is possible.

In particular, in the inventive device 40 undesirable cavities, which in particular lead to reductions in the thickness of the end faces as a result of flows of matrix material in the interior of the bonded component 44, only continue to be present to a significantly reduced extent. With the aid of the device 40 it is thus possible to manufacture in a sustainable and cost effective manner, in a reliable process with low material losses that is suitable for mass production, for example, integrally reinforced, dimensionally stable, shells made up from fibre-reinforced plastics.

### REFERENCE SYMBOL LIST

- 10.: Arrangement
- 12.: Base moulding tool
- 14.: Bonded component
- 16.: Release layer
- 18.: Moulding tool
- 20.: Moulding tool
- 22.: Aeration material
- 24.: Vacuum envelope
- 26.: Seal
- 28.: Vacuum channel
- 30.: Void
- 32.: Void
- 34.: Void
- 36.: Overhang (moulding tool)
- 40.: Device
- 42.: Base moulding tool
- 44.: Bonded component
- 46.: Moulding tool (outer-lying)
- 48.: Moulding tool (central)
- 50.: Moulding tool (outer-lying)
- 52.: Longitudinal edge
- 54.: Longitudinal edge
- 56.: Slump limiter (left-hand)
- 58.: Slump limiter (right-hand)
- 60.: End face (bonded component)
- 62.: End face (bonded component)
- 64.: End section (moulding tool)
- 66.: End section (moulding tool)
- 68.: Build height (moulding tool)
- 70.: Vertical interlock
- 72.: Seating face
- 74.: Hold-down face
- 76.: Arrow
- 78.: Aeration material
- 80.: Vacuum envelope
- 82.: Seal
- 84.: Vacuum channel
- 86.: Filter (vacuum channel)
- 88.: Protrusion (bonded component)
- 90.: Inclined end face

## Claims

1. A device (40) for the manufacture of a bonded component (44) from fibre-reinforced plastics, with
at least one base moulding tool (42);
at least one moulding tool (46, 48, 50), comprising:
at least two outer moulding tools (46, 50) and
at least one central moulding tool (48),
wherein the bonded component (44) is arrangeable between the base moulding tool (42) and the moulding tool (46, 48, 50), and
the moulding tool (46, 48, 50) is covered with an aeration material (78) and with a vacuum envelope (80),
wherein the vacuum envelope (80) is sealed with respect to the base moulding tool (42) by means of a seal (82),
**characterised in that**,
each of the at least two outer moulding tools (46, 50) has a slump limiter (56, 58) along its outer-lying longitudinal edge (52, 54) for supporting the moulding tool on the base moulding tool (42); and
the at least one moulding tool (46, 48, 50) is designed free of projections at opposing end sections (64, 66) of the moulding tool (46, 48, 50) such that opposing end faces (60, 62) of the bonded component (44) end flush with the opposing end sections (64, 66) of the at least one moulding tool (46, 48, 50), or projects underneath the latter.

2. The device (40) in accordance with Claim 1, **characterised in that**, at least one of the at least two outer moulding tools (46, 50) and the at least one central moulding tool (48) are two adjacent moulding tools (46, 48, 50) and the two adjacent moulding tools (46, 48, 50) have essentially the same build height (68).

3. The device (40) in accordance with one of the claims 1 to 2, **characterised in that**, at least one of the at least two outer moulding tools (46, 50) and the at least one central moulding tool (48) are two adjacent moulding tools (46, 48, 50) and the two adjacent moulding tools (46, 48, 50) have at least one vertical interlock (70).

4. The device (40) in accordance with Claim 3, **characterised in that**, the vertical interlock (70) is formed with at least one hold-down face (74) and at least one seating face (72).

5. The device (40) in accordance with Claim 4, **characterised in that**, the at least one hold-down face (74) and the at least one seating face (72) in each case have an essentially rectangular cross-sectional geometry.

6. The device (40) in accordance with one of the Claims 1 to 5, **characterised in that**, the base moulding tool (42) is formed from a metallic material.

7. A method for the manufacture of a bonded component (44) from fibre-reinforced plastics, using a device (40) in accordance with one of the Claims 1 to 6.

## Patentansprüche

1. Vorrichtung (40) zur Herstellung eines Klebebauteils (44) aus Faserverbundkunststoffen mit
mindestens einem Basisformwerkzeug (42);
mindestens einem Formwerkzeug (46, 48, 50), das Folgendes umfasst:
mindestens zwei äußere Formwerkzeuge (46, 50)
und mindestens ein mittleres Formwerkzeug (48),
wobei das Klebebauteil (44) zwischen dem Basisformwerkzeug (42) und dem Formwerkzeug (46, 48, 50) anordenbar ist und
das Formwerkzeug (46, 48, 50) mit einem Belüftungsmaterial (78) und mit einer Vakuumhülle (80) überdeckt ist,
wobei die Vakuumhülle (80) in Bezug zum Basisformwerkzeug (42) mittels einer Dichtung (82) abgedichtet ist,
**dadurch gekennzeichnet, dass**
jedes der mindestens zwei äußeren Formwerkzeuge (46, 50) eine Setzmaßbegrenzung (56, 58) entlang seiner äußeren Längskante (52, 54) zum Abstützen des Formwerkzeugs auf dem Basisformwerkzeug (42) aufweist; und
das mindestens eine Formwerkzeug (46, 48, 50) ohne Vorsprünge an entgegengesetzten Endabschnitten (64, 66) des Formwerkzeugs (46, 48, 50) ausgestaltet ist, sodass entgegengesetzte Stirnseiten (60, 62) des Klebebauteils (44) bündig mit den entgegensetzten Endabschnitten (64, 66) des mindestens einen Formwerkzeugs (46, 48, 50) abschließen, oder unter diesem herausragt.

2. Vorrichtung (40) nach Anspruch 1, **dadurch gekennzeichnet, dass** mindestens eins der mindestens zwei äußeren Formwerkzeuge (46, 50) und das mindestens eine mittlere Formwerkzeug (48) zwei benachbarte Formwerkzeuge (46, 48, 50) sind und die zwei benachbarten Formwerkzeuge (46, 48, 50) eine im Wesentlichen gleiche Bauhöhe (68) aufweisen.

3. Vorrichtung (40) nach einem der Ansprüche 1 bis 2, **dadurch gekennzeichnet, dass** mindestens eins der mindestens zwei äußeren Formwerkzeuge (46, 50) und das mindestens eine mittlere Formwerkzeug (48) zwei benachbarte Formwerkzeuge (46, 48, 50) sind und die zwei benachbarten Formwerkzeuge (46, 48, 50) mindestens eine Vertikalverriegelung (70) aufweisen.

4. Vorrichtung (40) nach Anspruch 3, **dadurch gekennzeichnet, dass** die Vertikalverriegelung (70) mit mindestens einem Niederhalter (74) und mit mindestens einem Auflager (72) ausgebildet ist.

5. Vorrichtung (40) nach Anspruch 4, **dadurch gekennzeichnet, dass** der mindestens eine Niederhalter (74) und das mindestens eine Auflager (72) jeweils eine im Wesentlichen viereckige Querschnittsgeometrie aufweisen.

6. Vorrichtung (40) nach einem der Ansprüche 1 bis 5, **dadurch gekennzeichnet, dass** das Basisformwerkzeug (42) aus einem metallischen Material ausgebildet ist.

7. Verfahren zur Herstellung eines Klebebauteils (44) aus Faserverbundkunststoffen unter Verwendung einer Vorrichtung (40) nach einem der Ansprüche 1 bis 6.

## Revendications

1. Dispositif (40) pour la fabrication d'un composant lié (44) à partir de plastique renforcé par des fibres, comprenant
au moins un outil de moulage de base (42) ;
au moins un outil de moulage (46, 48, 50), comprenant :
au moins deux outils de moulage extérieurs (46, 50) et
au moins un outil de moulage central (48),
le composant lié (44) pouvant être disposé entre l'outil de moulage de base (42) et l'outil de moulage (46, 48, 50), et
l'outil de moulage (46, 48, 50) étant recouvert d'un matériau d'aération (78) et d'une enveloppe sous vide (80),
l'enveloppe sous vide (80) étant scellée par rapport à l'outil de moulage de base (42) au moyen d'un joint (82),
**caractérisé en ce que**
chacun des au moins deux outil de moulage extérieurs (46, 50) présente un limiteur d'affaissement (56, 58) le long de son bord longitudinal situé à l'extérieur (52, 54) pour supporter l'outil de moulage sur l'outil de moulage de base (42) ; et
l'au moins un outil de moulage (46, 48, 50) est conçu sans saillies au niveau de sections d'extrémité opposées (64, 66) de l'outil de moulage (46, 48, 50), de telle sorte que des faces d'extrémité opposées (60, 62) du composant lié (44) se terminent en affleurement avec les sections d'extrémité opposées (64, 66) de l'au moins un outil de moulage (46, 48, 50), ou fassent saillie en dessous de ce dernier.

2. Dispositif (40) selon la revendication 1,
**caractérisé en ce**
**qu'**au moins l'un des au moins deux outils de moulage extérieurs (46, 50) et l'au moins un outil de moulage central (48) sont deux outils de moulage adjacents (46, 48, 50) et les deux outils de moulage adjacents (46, 48, 50) ont essentiellement la même hauteur de construction (68).

3. Dispositif (40) selon l'une des revendications 1 et 2, **caractérisé en ce qu'**au moins l'un des au moins deux outils de moulage extérieurs (46, 50) et l'au moins un outil de moulage central (48) sont deux outils de moulage adjacents (46, 48, 50) et les deux outils de moulage adjacents (46, 48, 50) ont au moins un emboîtement vertical (70).

4. Dispositif (40) selon la revendication 3, **caractérisé en ce que** l'emboîtement vertical (70) est formé avec au moins une face de maintien vers le bas (74) et au moins une face d'assise (72).

5. Dispositif (40) selon la revendication 4, **caractérisé en ce que** l'au moins une face de maintien vers le bas (74) et l'au moins une face d'assise (72) présentent dans chaque cas une géométrie en section transversale essentiellement rectangulaire.

6. Dispositif (40) selon l'une des revendications 1 à 5, **caractérisé en ce que** l'outil de moulage de base (42) est formé à partir d'un matériau métallique.

7. Procédé pour la fabrication d'un composant lié (44) à partir de plastique renforcé par des fibres en utilisant un dispositif (40) selon l'une des revendications 1 à 6.
